# EUROPÄISCHE PATENTSCHRIFT

(11) **EP 3 070 439 B1**
(45) Veröffentlichungstag und Bekanntmachung des Hinweises auf die Patenterteilung: **12.09.2018**
(21) Anmeldenummer: 15159916.4
(22) Anmeldetag: 19.03.2015
(51) Int. Cl.: G01D 11/24, F15B 15/28, G01D 11/30

(54) **SENSORGEHÄUSE**
SENSOR CASING
BOÎTIER DE CAPTEUR

(43) Veröffentlichungstag der Anmeldung: 21.09.2016
(73) Patentinhaber: SICK AG, 79183 Waldkirch (DE)
(72) Erfinder: Dorer, Armin, 78120 Furtwangen (DE); Zöllin, Jochen, 79379 Müllheim (DE)
(74) Vertreter: Rieger, Daniel-Stephan

(56) Entgegenhaltungen:
- EP-B1- 1 586 868
- DE-A1- 2 459 813
- DE-A1-102008 050 901
- DE-U1- 20 010 737
- DE-U1- 29 518 474
- DE-U1-202008 007 384

## Beschreibung

Die vorliegende Erfindung betrifft ein Sensorgehäuse mit mindestens einem Sensorelement gemäß dem Oberbegriff nach Anspruch 1.

Die Montage bzw. die Befestigung von Sensoren an Pneumatikzylindern erfolgt größtenteils in herstellerspezifischen Nuten, welche durch Ihre Varianzen und Toleranzen großen Anforderungen an die Flexiblität einer solchen Befestigung stellen. Gerade bei der C-Nut in Kombination mit der direkten Montage des Sensors von Oben in die Nut, was auch als 'Drop-In' Montage bezeichnet wird, ist eine sichere Befestigung wegen des runden Hinterschnitts und der unterschiedlichen Abmessungen von verschiedenen C-Nuten nicht immer gegeben. Weitere kritische Merkmale einer Befestigung sind der Montageaufwand, die Verlierbarkeit der Befestigung des Sensors, der benötigte Bauraum für die Befestigung und der Preis.

Befestigungen von 'Drop-In' montierbaren Sensoren nutzen meist die besonders ausgeprägte Kontur des Sensors um sich an einer Nutschulter abzustützen. Oft wird dann der Sensor verdreht oder gekippt von oben in die Nut eingeführt und dann in eine Sollposition zurückgedreht oder zurückgekippt. Danach wird mit einer Schraube, welche sich am Nutboden abstützt, der Sensor nach oben gegen die C-Nut gedrückt und die Kontur des Sensorgehäuses vermeidet dann, dass der Sensor aus der Nut herausgedrückt wird.

Andere Befestigungen sind Exzenter, die sich an der Nutschulter einspannen, Linsenkopfschrauben, Spannbacken oder Nutensteine, die sich unter die Nutschulter drücken.

Solche Befestigungen sind entweder aufwändig und somit teuer und benötigen viel Bauraum, oder im Falle von Spannbacken oder Nutensteinen wird die Sensorlänge vergrößert. Weiter drücken die Befestigungen den Sensor vom Nutboden und somit vom Gebermagneten weg oder es sind Befestigungen, welche nicht eine große Varianz an Nutgeometrien zulassen, beispielsweise Exzenter oder Linsenkopfschraube.

Die DE 20 2008 007 384 U1 offenbart ein Gehäuse für einen Sensor zur auswechselbaren Halterung innerhalb einer durch eine Spaltöffnung zugänglichen Nut mit T-Profil mit einem L-förmigen Gehäusefuß.

Die DE 200 10 737 U1 offenbart eine Anordnung zum Befestigen eines Sensors an einem Träger umfassend eine dem Träger zugeordnete Nut und einen dem Sensor zugeordneten, in die Nut durch ihre Öffnung einsetzbaren Halter mit einer sich an einer Nutoberfläche abstützenden Klemmschraube zum Festsetzen des Halters in der Nut.

Die DE 295 18 474 U1 offenbart eine in eine trapezförmige Führungsnut einklinkbare und innerhalb dieser Nut axial verstellbar zu befestigende Schwalbenschwanzhalterung für Magnetfeldsensoren.

Die EP 1 586 868 B1 offenbart ein Sensorgehäuse mit einem leistenartigen Gehäusevorsprung, der zur Aufnahme in einer längs eines Linearantrieb-Gehäuses verlaufenden Führungsnut vorgesehen ist.

Die DE 24 59 813 A1 offenbart Steuernocken zur Betätigung von Schaltern, Ventilen und dergleichen, der mit seinem die Steuerflächen aufweisenden Nockenkörper in einer Befestigungsnut befestigbar ist.

Die DE 10 2008 050 901 A1 offenbart eine Sensorvorrichtung zur Fixierung mindestens eines Sensors an einer Nut, umfassend ein Basisteil, an welchem der mindestens eine Sensor fixiert ist.

Eine Aufgabe der Erfindung besteht darin, ein Sensorgehäuse bereitzustellen, das als wichtigstes Kriterium sicher befestigt werden kann. Weiter soll eine schnelle und einfache Montage ermöglicht werden. Das Sensorgehäuse soll wenig Bauraum beanspruchen. Weiter sollen Befestigungsmittel nicht verloren gehen. Weiter soll eine sichere Befestigung in verschiedenen Nuten bzw. Nutgeometrien möglich sein. Weiter soll der Sensor bzw. das Sensorgehäuse mehrfach montierbar sein. Weiter soll eine elektrisehe Kontaktierung zwischen der Nut und dem Sensorgehäuse bereitgestellt werden. Weiter soll der Sensor kostengünstig herstellbar sein.

Die Aufgabe wird gemäß Anspruch 1 gelöst durch ein Sensorgehäuse mit mindestens einem Sensoreiement, wobei das Sensorgehäuse einen ieistenartigen Gehäusevorsprung besitzt, der zur Aufnahme in einer längs eines Linearantrieb-Gehäuses verlaufenden Nut vorgesehen ist, wobei mindestens eine langgestreckte leistenartige Leiterplatte in diesem Gehäusevorsprung in dessen Längsrichtung angeordnet ist, wobei der Gehäusevorsprung ebene Seitenflächen aufweist, so dass kein Hinterschnitt gebildet ist, wobei der Abstand der Seitenflächen kleiner als der Abstand einer Nutöffnung der Nut ist, wobei das Sensorgehäuse wenigstens ein schräg zu wenigstens einer Seitenfläche angeordnetes Gewinde aufweist, zur Aufnahme wenigstens einer Befestigungsschraube zur Fixierung des Sensorgehäuses in der Nut.

Dadurch, dass das Sensorgehäuse einen Gehäusevorsprung aufweist, wobei der Gehäusevorsprung ebene Seitenflächen aufweist, so dass kein Hinterschnitt gebildet ist, und wobei der Abstand der Seitenflächen kleiner als der Abstand einer Nutöffnung der Nut ist, kann der Sensor direkt senkrecht zur Nut in die Nut eingesetzt werden. Ein seitliches Einführen oder ein Eindrehen in die Nut ist damit nicht erforderlich. Damit ist ein echtes 'Drop-In' möglich ohne den Sensor zu verkippen.

Gemäß der Erfindung ist wenig Bauraum für die gesamte Befestigung notwendig, da lediglich wenigstens eine Befestigungsschraube in dem Sensorgehäuse vorgesehen ist. Die Befestigungsschraube ist vorzugsweise an einem Ende des Sensorgehäuses untergebracht. Dadurch ist ein möglicher Blindbereich, also ein Bereich des Sensorgehäuses, der als Platz für die Befestigungsschraube vorgesehen sein muss, sehr klein.

Da der Gehäusevorsprung ebene Seitenflächen aufweist, so dass kein Hinterschnitt gebildet ist, wobei der Abstand der Seitenflächen kleiner als der Abstand einer Nutöffnung der Nut ist, ist eine große Varianz an möglichen verschiedenen Nuten bzw. an verschiedenen Nutgeometrien abdeckbar.

Das Sensorgehäuse ist sehr preiswert, da das Sensorgehäuse beispielsweise als Kunststoffteil herstellbar ist. Beispielsweise ist das Sensorgehäuse ein Kunststoffspritzling, der sehr preiswert herstellbar ist.

Da das Sensorgehäuse mit der wenigstens einen Befestigungsschraube befestigt wird, die in einem Gewinde des Sensorgehäuses geführt ist, kann die Befestigungsschraube mehrfach verschleißfrei angezogen und wieder gelöst werden. Dadurch ist der Sensor mehrfach montierbar, ohne dass die Haltekraft nachlässt oder sich verschlechtert.

Dadurch, dass die wenigstens eine Befestigungsschraube in dem Gewinde des Sensorgehäuses geführt ist, ist die Befestigungsschraube nur schwer verlierbar, da viele Umdrehungen in dem Gewinde notwendig sind, bis die Befestigungsschraube aus dem Sensorgehäuse fällt.

Da das Sensorgehäuse mit der wenigstens einen Befestigungsschraube befestigt wird, die in einem Gewinde des Sensorgehäuses geführt ist, kann die Montage sehr einfach durchgeführt werden. Es genügt dabei, den Sensor in einer gewünschten Position in die Nut einzusetzen und danach die Befestigungsschraube, beispielsweise mit einem Werkzeug, festzuschrauben.

Dadurch, dass das Sensorgehäuse die wenigstens eine Befestigungsschraube aufweist, die in einem Schraubenschacht mit Gewinde geführt ist, sind die Entwicklungskosten für einen derartigen Sensor gering. Der Schraubenschacht weist dabei eine einfache unproblematische Kontur auf und kann beispielsweise automatisiert mit einem Gewindeschneidwerkzeug spanabhebend hergestellt werden.

Weiter könnte auch eine selbstschneidende Befestigungsschraube vorgesehen sein. Dadurch wäre das Sensorgehäuse noch einfacher und kostengünstiger herstellbar. Als Betätigungsmittel der Befestigungsschraube kann beispielsweise ein Innensechskant, ein Schlitz, ein Kreuzschlitz oder ein Innensechsrund vorgesehen werden. Dadurch sind Standardwerkzeuge, wie gängige Schraubendreher oder entsprechende Befestigungsschlüssel zur Befestigung ausreichend.

Dadurch, dass das Sensorgehäuse die wenigstens eine Befestigungsschraube aufweist, die in einem Gewinde geführt ist, ist eine hohe Haltekraft bei gleichzeitig geringem Anzugsdrehmoment möglich.

Bevorzugt ist an jedem stirnseitigen Ende des Sensorgehäuses je ein Gewinde mit einer Befestigungsschraube zur Befestigung vorgesehen. Dadurch können insbesondere sehr lange Sensorgehäuse stabil in einer Nut befestigt werden. Das Gewinde ist mit einem elektrischen Potential, nämlich einem Erdungspotential des Sensors bzw. der Sensorelektronik verbunden. Dadurch ist gewährleistet, dass die Befestigungsschraube auch mit dem elektrischen Potential des Sensors verbunden ist. Voraussetzung dafür ist, dass sowohl das Gewinde als auch die Befestigungsschraube leitfähig sind. Beispielsweise ist das Gewinde und/oder die Befestigungsschraube aus leitfähigem Material, beispielsweise aus leitfähigem Kunststoff oder aus Metall. Bei einer Befestigung des Sensorgehäuses in einer Nut durchdringt die Befestigungsschraube eine möglicherweise vorhandene Oxidschicht des metallischen Nutkörpers, also beispielsweise das Gehäuse einer Kolben-Zylinderanordnung bzw. das Gehäuse einer Linearanordnung so, dass eine leitfähige Verbindung zwischen Nutkörper und Befestigungsschraube erfolgt, so dass das elektrische Potential, insbesondere ein Erdungspotential der Sensorelektronik, mit dem Nutkörper verbunden ist. Somit ist eine sichere elektrische Verbindung zur Nut und damit zum Linearantriebsgehäuse gewährleistet. Dadurch wird eine bessere elektromagnetische Verträglichkeit des Sensors erreicht. Das bedeutet, dass der Sensor unempfindlicher gegenüber elektrischen Störungen ist.

In Weiterbildung der Erfindung ist das Gewinde teilweise in dem Gehäusevorsprung angeordnet. Dadurch ist es möglich, die Spitze der Befestigungsschraube möglichst tief in der Befestigungsnut anzuordnen, so dass eine bessere Befestigung des Sensorgehäuses ermöglicht wird.

In einer bevorzugten Ausführung der Erfindung ist die Befestigungsschraube im Sensorgehäuse versenkt. Dadurch steht die Befestigungsschraube nicht aus dem Sensorgehäuse heraus. Dadurch wird verhindert, dass das Sensorgehäuse unabsichtlich gelöst wird. Die Befestigungsschraube ist quasi geschützt in dem Sensorgehäuse angeordnet. Lediglich wenn der Sensor befestigt wird, tritt die Spitze über den Querschnitt des Sensors hinaus und wird gegen eine Nutwand gepresst, wodurch das Sensorgehäuse befestigt wird.

In Weiterbildung der Erfindung ist die Befestigungsschraube eine Madenschraube. Eine Madenschraube zeichnet sich dadurch aus, dass die Schraube keinen Kopf aufweist, der einen größeren Durchmesser als der Schraubenschaft aufweist. Der Schraubenkopf hat vielmehr den gleichen Durchmesser wie der Schraubenschaft. Dadurch kann der Schraubenkopf in den Gewindeschaft des Sensorgehäuses eingedreht werden, wodurch die Madenschraube besonders einfach in dem Sensorgehäuse versenkbar ausgebildet ist.

In einer bevorzugten Ausführungsform weist die Befestigungsschraube eine Schraubenspitze auf, wobei die Schraubenspitze bei einer Befestigung des Sensorgehäuses unter einer Nutschulter angeordnet ist.

Die Schraubenspitze ist in ihrer Form und Einbaulage so ausgelegt, dass bei der Montage die Schräge der Schraubenspitze, bei verschiedenen Nutgeometrien, stets unter die Nutschulter greift.

In Weiterbildung der Erfindung weist das Ende der Befestigungsschraube eine Spitzenschräge bzw. Schräge der Schraubenspitze bzw. Phase auf, wodurch das Sensorgehäuse und die Befestigungsschraube mindestens zwischen den Nutwänden einen Kraftschluss bilden, wobei das Sensorgehäuse in Richtung Nutboden bewegt ist bzw. wird.

Eine Schräge der Schraubenspitze drückt den Sensor beim Hineindrehen der Schraube gegen die Nut und verkeilt den Sensor somit in der Nut. Die Schräge der Schraubenspitze ist so gestaltet, dass erstens die Spitze unter die Nutschulter jeder vorgegebenen Nutgeometrie fährt und zweitens die Kraft so wirkt, dass der Sensor in Richtung Nutboden gedrückt wird. Die Befestigungsschraube weist einen stufenförmigen Abschnitt auf.

Durch einen stufenförmigen Abschnitt bzw. unterschiedliche Außendurchmesser der Schraube kann zum einen die Schräglage der Schraube im Gehäuse optimal ausgereizt werden, ohne dass die Schraube aus dem Gehäuse austritt und dennoch das Betätigungsmittel der Befestigungsschraube genügend groß gewählt werden, hinsichtlich Drehmoment und gängiger Schlüsselgröße.

In Weiterbildung der Erfindung ist das Sensorgehäuse im Querschnitt L-förmig ausgebildet. Dadurch weist der Gehäusevorsprung eine gemeinsame ebene Seitenfläche mit dem Sensorgehäuse auf. Dadurch kann der Sensor auch bei räumlich einseitig begrenzten Nuten noch in die Nut eingesetzt werden. Weiter ist das im Querschnitt L-förmige Sensorgehäuse auch einfacher herzustellen, da es weniger Kanten aufweist.

In Weiterbildung der Erfindung erstreckt sich ein Gehäusedeckel nahezu über die gesamte Sensorgehäuselänge. Das Gehäuse besteht daher hauptsächlich aus lediglich zwei Komponenten, nämlich dem Sensorgehäuse und dem Gehäusedeckel.

Eine Leiterplatte, die sich ebenfalls nahezu über die gesamte Gehäuselänge erstreckt, kann parallel zu der Sensorgehäuseöffnung in das Sensorgehäuse eingebaut bzw. montiert werden. Dadurch kann die Leiterplatte einfach automatisiert in das Sensorgehäuse eingeführt werden, so dass eine preiswerte Sensormontage ermöglicht wird.

Bei dem Sensorgehäuse erfolgt die Montage der Leiterplatte nicht von einer Stirnseite, sondern von einer Längsseite. Gerade bei längeren Leiterplatten kann das Einführen der Leiterplatte von einer Stirnseite zu Problemen führen, aufgrund von Maß-, Form- und Lagetoleranzen. Durch die Öffnung in dem Gehäuse, an der der Gehäusedeckel angeordnet wird, lässt sich die mindestens eine Leiterplatte einfach in das Gehäuse einfügen.

Das Sensorgehäuse besteht dabei vorzugsweise aus Kunststoff. Das Sensorgehäuse ist vorzugsweise ein Kunststoffspritzling. Auch der Gehäusedeckel ist dabei vorzugsweise aus Kunststoff und besonders bevorzugt ein Kunststoffspritzling. Der Kunststoff des Sensorgehäuses und des Gehäusedeckels enthält bevorzugt Kohlefasern oder Glasfasern.

In einer bevorzugten Ausführungsform sind die Sensorelemente Hallelemente. Hallelemente haben den Vorteil, dass diese sehr kleine Abmessungen aufweisen, wodurch eine Vielzahl von Hallelementen in einer Reihe angeordnet werden können, wodurch ein hochauflösender Wegsensor gebildet werden kann.

In Weiterbildung der Erfindung weist das Sensorgehäuse mechanische Verstrebungen auf, die im Gehäuseinnern angeordnet sind. Durch die mechanischen Verstrebungen bzw. Versteifungselemente wird die Stabilität des Gehäuses erhöht. Die Verstrebungen sind dabei einstückig mit dem Sensorgehäuse verbunden. Die Verstrebungen weisen beispielsweise eine kastenförmige, stabsförmige, wabenförmige oder kreuzförmige Form auf.

In einer weiter bevorzugten Ausführungsform weist der Gehäusedeckel an der Innenseite mechanische Verstrebungen auf. Durch die mechanischen Verstrebungen bzw. Versteifungselemente wird die Stabilität des Gehäusedeckels erhöht. Die Verstrebungen sind dabei einstückig mit dem Gehäusedeckel verbunden. Die Verstrebungen weisen beispielsweise eine kastenförmige, stabsförmige, wabenförmige oder kreuzförmige Form auf.

Bevorzugt ist zwischen dem Sensorgehäuse und dem Gehäusedeckel eine umlaufende Nut angeordnet, in der eine umlaufende Dichtung angeordnet ist. Dadurch wird eine dichte Verbindung zwischen Sensorgehäuse und Gehäusedeckel gebildet. Die umlaufende Dichtung ist beispielsweise durch einen Dichtungsring oder eine Formdichtung gebildet.

In Weiterbildung der Erfindung ist zwischen dem Sensorgehäuse und dem Gehäusedeckel wenigstens eine Stiftverbindung vorgesehen. Durch die Stiftverbindungen wird eine Steifigkeit und Stabilität zwischen Sensorgehäuse und Gehäusedeckel weiter erhöht. Die Stiftverbindungen sind dabei bevorzugt in gleichmäßigen Abständen entlang des Gehäusedeckels bzw. entlang des Sensorgehäuses angeordnet. Beispielsweise sind die Stiftverbindungen jeweils zwischen den Verstrebungen angeordnet.

In Weiterbildung der Erfindung sind das Sensorgehäuse und der Gehäusedeckel mittels Schweißen, Kleben, Einpressen und/oder Vergießen miteinander verbunden. Beim Schweißen kann es sich beispielsweise um Ultraschallschweißen handeln. Weiter kann der Deckel beispielsweise mittels eines Klebers befestigt werden, der mittels Ultraviolettlicht gehärtet wird. Dadurch kann der Zeitpunkt der Fixierung sehr exakt vorgenommen werden. Ein Einpressen hat den Vorteil, dass keine zusätzlichen Befestigungskomponenten notwendig werden. Kleben und Vergießen haben dabei den Vorteil, dass eine sehr robuste dichte Verbindung zwischen Sensorgehäuse und Gehäusedeckel erreicht wird.

In einer bevorzugten Ausführungsform sind in dem Sensorgehäuse kapazitive Bedienungselemente angeordnet. Dadurch, dass die Sensorgehäusewand bzw. die Gehäusedeckelwand sehr dünn ausgeführt werden können, beispielsweise kleiner als 2 mm Wandstärke, insbesondere kleiner als 1 mm Wandstärke, können direkt hinter der Sensorgehäusewand bzw. der Gehäusedeckelwand kapazitive Bedienungselemente angeordnet werden. Dadurch brauchen keine zusätzlichen Dichtungen für die Bedienelemente vorgesehen werden. An dem Gehäuse brauchen auch keine zusätzlichen Löcher für Bedienelemente vorgesehen werden.

In Weiterbildung der Erfindung weist das Sensorgehäuse an einem stirnseitigen Ende einen elektrischen Anschluss, insbesondere einen Kabelanschluss oder einen Stecker auf. Dadurch kann der Sensor mit Energie versorgt werden und die Ausgangssignale einer Steuerung zugeführt werden.

Bevorzugt wird das Sensorgehäuse in verschiedenen Längen hergestellt.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: eine Querschnittsdarstellung des Sensorgehäuses entlang der Befestigungsschraube;
- Figur 2: eine perspektivische Darstellung des Sensorgehäuses in einer Nut;
- Figur 3: eine perspektivische Darstellung des Sensorgehäuses;
- Figur 4: eine weitere perspektivische Darstellung des Sensorgehäuses;
- Figur 5: eine Darstellung des geöffneten Sensorgehäuses ohne Gehäusedeckel;
- Figur 6: ein Sensorgehäuse und ein Gehäusedeckel, wobei das Innere des Sensorgehäuses dargestellt ist;
- Figur 7: ein Sensorgehäuse und einen Gehäusedecke, wobei die Innenseite des Gehäusedeckels dargestellt ist.
- Figur 8 bis 10: jeweils ein Sensorgehäuse mit jeweils unterschiedlicher Länge.

In den nachfolgenden Figuren sind identische Teile mit identischen Bezugszeichen versehen.

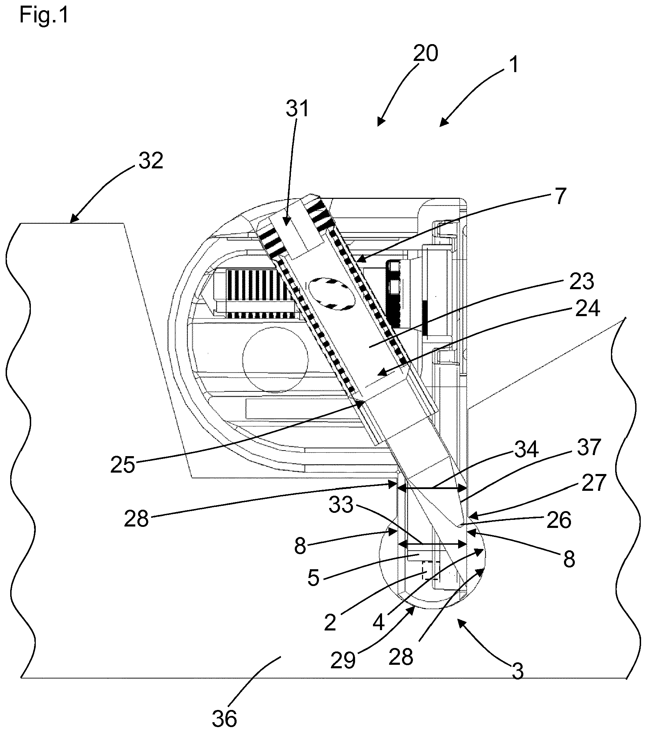

Figur 1 zeigt eine Querschnittsdarstellung des Sensorgehäuses entlang der Befestigungsschraube.

Figur 1 zeigt ein Sensorgehäuse 1 mit mindestens einem Sensorelement 2, wobei das Sensorgehäuse 1 einen leistenartigen Gehäusevorsprung 3 besitzt, der zur Aufnahme in einer längs eines Linearantrieb-Gehäuses 32 verlaufenden Nut 4 vorgesehen ist, wobei mindestens eine langgestreckte leistenartige Leiterplatte 5 in diesem Gehäusevorsprung 3 in dessen Längsrichtung angeordnet ist, wobei der Gehäusevorsprung 3 ebene Seitenflächen 8 aufweist, so dass kein Hinterschnitt gebildet ist, wobei der Abstand 33 der Seitenflächen kleiner als der Abstand 34 einer Nutöffnung der Nut ist, wobei das Sensorgehäuse 1 wenigstens ein schräg zu wenigstens einer Seitenfläche 8 angeordnetes Gewinde 7 aufweist zur Aufnahme wenigstens einer Befestigungsschraube 23 zur Fixierung des Sensorgehäuses 1 in der Nut 4.

Dadurch kann der Sensor 20 direkt senkrecht zur Nut 4 in die Nut 4 eingesetzt werden. Ein seitliches Einführen oder ein Eindrehen in die Nut 4 ist damit nicht erforderlich. Damit ist ein echtes 'Drop-In' möglich, ohne den Sensor 20 zu verkippen.

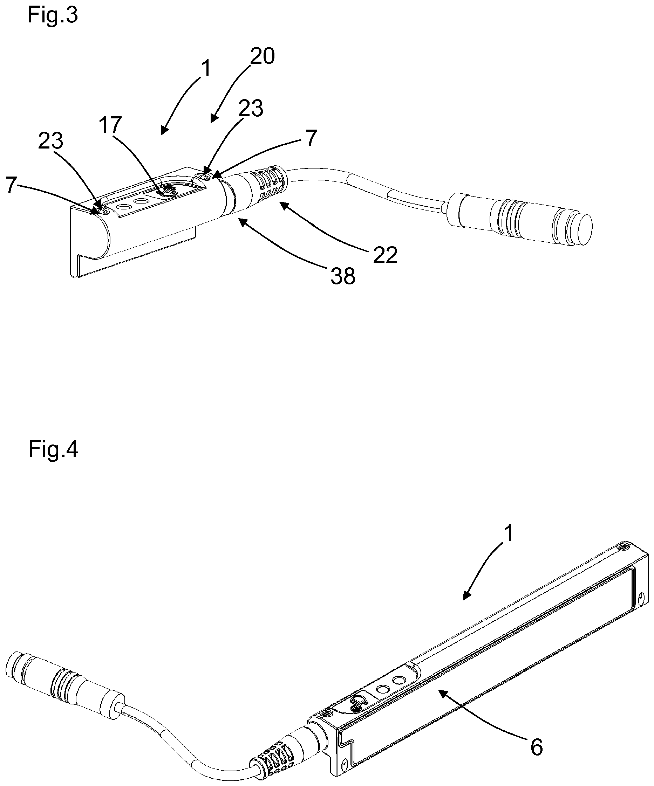

Figur 3 zeigt eine perspektivische Darstellung des Sensorgehäuses. Je eine Befestigungsschraube 23 ist vorzugsweise an jeweils einem Ende des Sensorgehäuses 1 untergebracht. Dadurch ist ein möglicher Blindbereich, also ein Bereich des Sensorgehäuses 1, der als Platz für die Befestigungsschraube 23 vorgesehen sein muss, sehr klein.

Da das Sensorgehäuse 1 gemäß Figur 1 mit der wenigstens einen Befestigungsschraube 23 befestigt wird, die in einem Gewinde 7 des Sensorgehäuses 1 geführt ist, kann die Befestigungsschraube 23 mehrfach verschleißfrei angezogen und wieder gelöst werden. Dadurch ist der Sensor 20 mehrfach montierbar, ohne dass die Haltekraft nachlässt oder sich verschlechtert.

Dadurch, dass die Befestigungsschraube 23 in dem Gewinde 7 des Sensorgehäuses 1 geführt ist, ist die Befestigungsschraube 23 nur schwer verlierbar, da viele Umdrehungen in dem Gewinde 7 notwendig sind bis die Befestigungsschraube 23 aus dem Sensorgehäuse 1 fällt.

Da das Sensorgehäuse 1 mit der wenigstens einen Befestigungsschraube 23 befestigt wird, die in einem Gewinde 7 des Sensorgehäuses 1 geführt ist, kann die Montage sehr einfach durchgeführt werden. Es genügt dabei, den Sensor 20 in einer gewünschten Position in die Nut 4 einzusetzen und danach die Befestigungsschraube 23, beispielsweise mit einem Werkzeug festzuschrauben.

Als Betätigungsmittel 31 der Befestigungsschraube 23 kann beispielsweise ein Innensechskant, ein Schlitz, ein Kreuzschlitz oder ein Innensechsrund vorgesehen werden. Dadurch sind Standardwerkzeuge, wie gängige Schraubendreher oder entsprechende Befestigungsschlüssel zur Befestigung ausreichend.

Dadurch, dass das Sensorgehäuse 1 die wenigstens eine Befestigungsschraube 23 aufweist, die in einem Gewinde 7 geführt ist, ist eine hohe Haltekraft bei gleichzeitig geringem Anzugsdrehmoment möglich.

Gemäß Figur 1 ist das Gewinde 7 mit einem elektrischen Potential, insbesondere einem Erdungspotential des Sensors 20 bzw. der Sensorelektronik verbunden. Dadurch ist gewährleistet, dass die Befestigungsschraube 23 auch mit dem elektrischen Potential des Sensors 20 verbunden ist. Voraussetzung dafür ist, dass sowohl das Gewinde 7 als auch die Befestigungsschraube 23 leitfähig sind. Beispielsweise ist das Gewinde 7 und/oder die Befestigungsschraube 23 aus leitfähigem Material, beispielsweise aus leitfähigem Kunststoff oder aus Metall. Bei einer Befestigung des Sensorgehäuses 1 in einer Nut 4 durchdringt die Befestigungsschraube 23 eine möglicherweise vorhandene Oxidschicht des metallischen Nutkörpers, also beispielsweise das Gehäuse einer Kolben-Zylinderanordnung bzw. das Gehäuse 32 einer Linearanordnung so, dass eine leitfähige Verbindung zwischen Nutkörper 36 und Befestigungsschraube 23 erfolgt, so dass das elektrische Potential, insbesondere ein Erdungspotential der Sensorelektronik mit dem Nutkörper 36 verbunden ist.

Gemäß Figur 1 ist die Befestigungsschraube 23 teilweise in dem Gehäusevorsprung 3 angeordnet. Dadurch ist es möglich, die Schraubenspitze 26 der Befestigungsschraube 23 möglichst tief in der Nut 4 bzw. Befestigungsnut anzuordnen, so dass eine bessere Befestigung des Sensorgehäuses 1 ermöglicht wird.

Weiter ist die Befestigungsschraube 23 im Sensorgehäuse 1 versenkt. Dadurch steht die Befestigungsschraube 23 nicht aus dem Sensorgehäuse 1 heraus. Lediglich wenn der Sensor 20 befestigt wird, tritt die Schraubenspitze 26 über den Querschnitt des Sensors 20 hinaus und wird gegen eine Nutwand 28 gepresst, wodurch das Sensorgehäuse 1 befestigt wird.

Gemäß Figur 1 ist die Befestigungsschraube 23 eine Madenschraube 24. Eine Madenschraube 24 zeichnet sich dadurch aus, dass die Schraube keinen Kopf aufweist, der einen größeren Durchmesser als der Schraubenschaft aufweist. Der Schraubenkopf hat vielmehr den gleichen Durchmesser wie der Schraubenschaft.

Weiter weist die Befestigungsschraube 23 eine Schraubenspitze 26 auf, wobei die Schraubenspitze 26 bei einer Befestigung des Sensorgehäuses 1 unter einer Nutschulter angeordnet ist.

Die Schraubenspitze ist in ihrer Form und Einbaulage so ausgelegt, dass bei der Montage die Schräge der Schraubenspitze bei verschiedenen Nutgeometrien stets unter die Nutschulter greift.

Das Ende der Befestigungsschraube weist eine Spitzenschräge bzw. Schräge 37 der Schraubenspitze 26 bzw. Phase auf, wodurch das Sensorgehäuse 1 und die Befestigungsschraube 23 mindestens zwischen den Nutwänden 28 einen Kraftschluss bilden, wobei das Sensorgehäuse 1 in Richtung Nutboden 29 bewegt ist bzw. wird.

Eine Schräge 37 der Schraubenspitze 26 drückt den Sensor 20 beim Hineindrehen der Schraube gegen die Nut 4 und verkeilt den Sensor 20 somit in der Nut 4. Die Schräge 37 der Schraubenspitze 26 ist so gestaltet, dass erstens die Schraubenspitze 26 unter die Nutschulter 27 jeder vorgegebenen Nutgeometrie fährt und zweitens die Kraft so wirkt, dass der Sensor 20 in Richtung Nutboden 29 gedrückt wird.

Weiter weist die Befestigungsschraube 23 einen stufenförmigen Abschnitt 25 auf.

Durch einen stufenförmigen Abschnitt 25 bzw. unterschiedliche Außendurchmesser der Befestigungsschraube 23 kann zum einen die Schräglage der Befestigungsschraube im Sensorgehäuse 1 optimal ausgereizt werden, ohne dass die Befestigungsschraube 23 aus dem Sensorgehäuse 1 austritt und dennoch das Betätigungsmittel 31 der Befestigungsschraube 23 genügend groß gewählt werden, hinsichtlich Drehmoment und gängiger Schlüsselgröße.

Gemäß Figur 1 ist das Sensorgehäuse 1 im Querschnitt L-förmig ausgebildet. Dadurch weist der Gehäusevorsprung 3 eine gemeinsame ebene Seitenfläche 8 mit dem Sensorgehäuse 1 auf. Dadurch kann der Sensor 20 auch bei räumlich einseitig begrenzten Nuten 4 noch in die Nut 4 eingesetzt werden. Weiter ist das im Querschnitt L-förmige Sensorgehäuse 1 auch einfacher herzustellen, da es weniger Kanten aufweist.

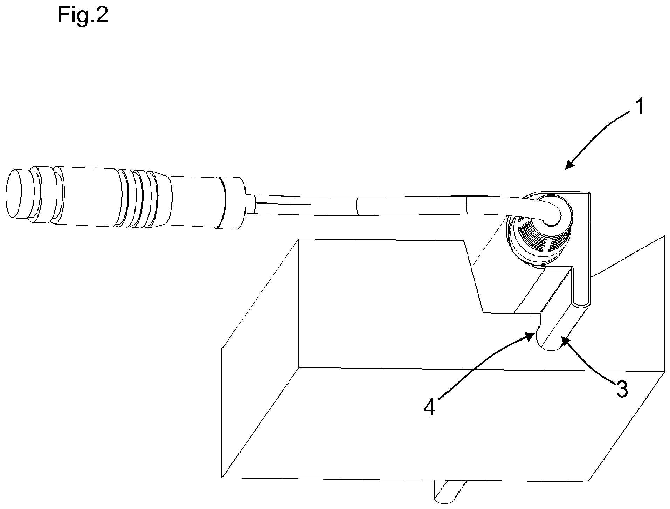

Figur 2 zeigt das Sensorgehäuse 1, das in einer Nut 4 angeordnet ist. Die Nut 4 ist dabei kürzer dargestellt, damit der Gehäusevorsprung 3 sichtbar ist. Die Nut 4 erstreckt sich üblicherweise über die Länge des Sensorgehäuses 1 hinaus.

Gemäß Figur 3 ist an jedem Ende des Sensorgehäuses 1 je ein Gewinde 7 mit einer Befestigungsschraube 23 zur Befestigung vorgesehen. Dadurch können insbesondere sehr lange Sensorgehäuse 1 stabil in einer Nut 4 befestigt werden.

Weiter sind in dem Sensorgehäuse 1 kapazitive Bedienungselemente 17 angeordnet.

Gemäß Figur 3 weist das Sensorgehäuse 1 an einem stirnseitigen Ende 38 einen elektrischen Anschluss 22, insbesondere einen Kabelanschluss oder einen Stecker auf. Dadurch kann der Sensor 20 mit Energie versorgt werden und die Ausgangssignale einer Steuerung zugeführt werden.

Figur 4 zeigt eine weitere perspektivische Darstellung des Sensorgehäuses 1. Gemäß Figur 4 erstreckt sich ein Gehäusedeckel 6 nahezu über die gesamte Sensorgehäuselänge. Das Sensorgehäuse gemäß Figur 4 ist im Unterschied zu dem Sensorgehäuse gemäß Figur 3 länger ausgebildet.

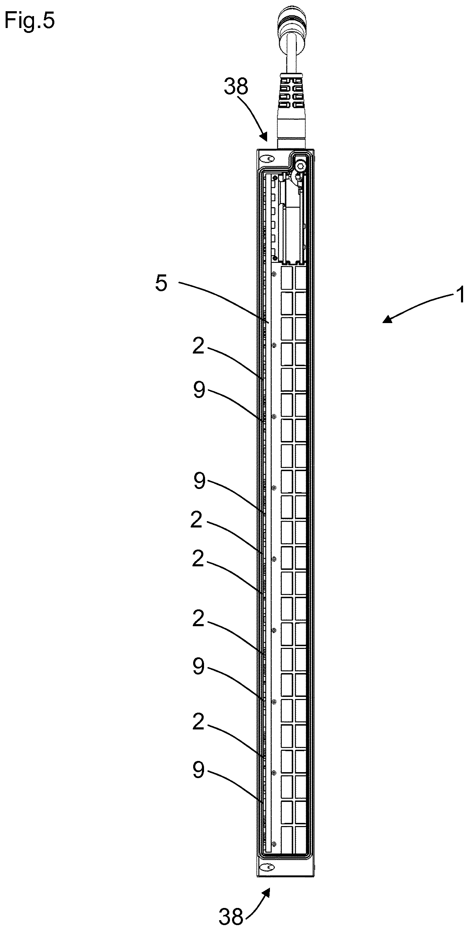

Figur 5 zeigt eine Darstellung des geöffneten Sensorgehäuses 1 ohne Gehäusedeckel. Gemäß Figur 5 kann eine Leiterplatte 5, die sich ebenfalls nahezu über die gesamte Gehäuselänge erstreckt, parallel zu der Sensorgehäuseöffnung in das Sensorgehäuse 1 eingebaut bzw. montiert werden.

Bei dem Sensorgehäuse 1 erfolgt die Montage der Leiterplatte 5 nicht von einer Stirnseite, sondern von einer Längsseite. Gerade bei längeren Leiterplatten 5 kann das Einführen der Leiterplatte 5 von einer Stirnseite 38 zu Problemen führen, aufgrund von Maß-, Form- und Lagetoleranzen. Durch die Öffnung in dem Sensorgehäuse 1, an der der Gehäusedeckel 6 angeordnet wird, lässt sich die mindestens eine Leiterplatte 5 einfach in das Sensorgehäuse 1 einfügen.

Vorzugsweise sind die Sensorelemente 2 Hallelemente 9. Hallelemente 9 haben den Vorteil, dass diese sehr kleine Abmessungen aufweisen, wodurch eine Vielzahl von Hallelementen 9 in einer Reihe angeordnet werden können, wodurch ein hochauflösender Wegsensor gebildet werden kann.

Das Sensorgehäuse 1 besteht dabei vorzugsweise aus Kunststoff. Das Sensorgehäuse 1 ist vorzugsweise ein Kunststoffspritzling.

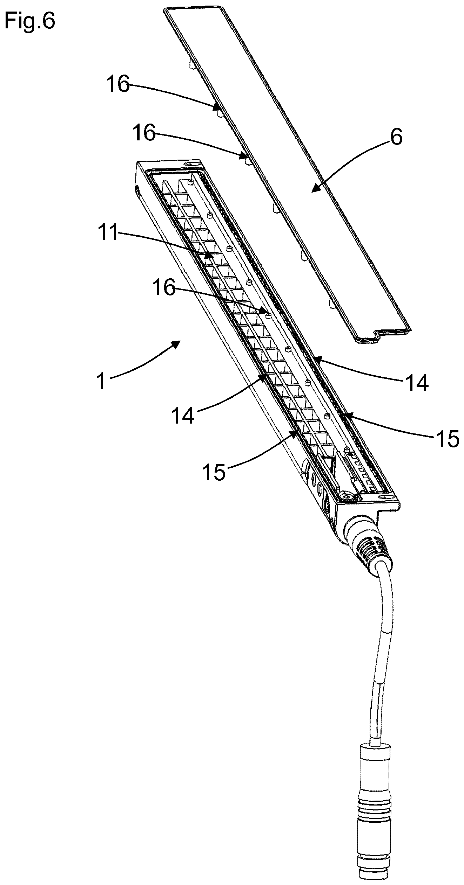

Figur 6 zeigt ein Sensorgehäuse 1 und einen Gehäusedeckel 6, wobei das Innere des Sensorgehäuses dargestellt ist. Das Gehäuse besteht hauptsächlich aus lediglich zwei Komponenten, nämlich dem Sensorgehäuse 1 und dem Gehäusedeckel 6.

Auch der Gehäusedeckel 6 ist dabei vorzugsweise aus Kunststoff und besonders bevorzugt ein Kunststoffspritzling. Der Kunststoff des Sensorgehäuses 1 und des Gehäusedeckels 6 enthält bevorzugt Kohlefasern oder Glasfasern.

Gemäß Figur 6 weist das Sensorgehäuse 1 mechanische Verstrebungen 11 auf, die im Gehäuseinnern angeordnet sind. Durch die mechanischen Verstrebungen 11 bzw. Versteifungselemente wird die Stabilität des Sensorgehäuses 1 erhöht. Die Verstrebungen 11 sind dabei einstückig mit dem Sensorgehäuse verbunden. Die Verstrebungen 11 weisen beispielsweise eine kastenförmige, stabsförmige, wabenförmige oder kreuzförmige Form auf.

Gemäß Figur 6 ist zwischen dem Sensorgehäuse 1 und dem Gehäusedeckel 6 eine umlaufende Nut 14 angeordnet, in der eine umlaufende Dichtung 15 angeordnet ist. Dadurch wird eine dichte Verbindung zwischen Sensorgehäuse 1 und Gehäusedeckel 6 gebildet. Die umlaufende Dichtung 15 ist beispielsweise durch einen Dichtungsring oder eine Formdichtung gebildet.

Gemäß Figur 6 ist zwischen dem Sensorgehäuse 1 und dem Gehäusedeckel 6 wenigstens eine Stiftverbindung 16 vorgesehen. Durch die Stiftverbindungen 16 wird eine Steifigkeit und Stabilität zwischen Sensorgehäuse 1 und Gehäusedeckel 6 weiter erhöht. Die Stiftverbindungen 16 sind dabei bevorzugt in gleichmäßigen Abständen entlang des Gehäusedeckels 6 bzw. entlang des Sensorgehäuses 1 angeordnet. Beispielsweise sind die Stiftverbindungen 16 jeweils zwischen den Verstrebungen 11 angeordnet.

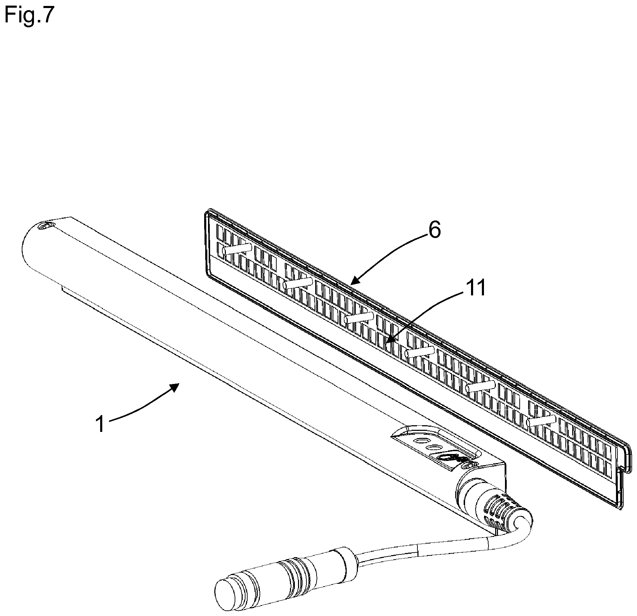

Figur 7 zeigt ein Sensorgehäuse 1 und einen Gehäusedeckel 6, wobei die Innenseite des Gehäusedeckels 6 dargestellt ist.

Weiter weist der Gehäusedeckel 6 an der Innenseite mechanische Verstrebungen 11 auf. Durch die mechanischen Verstrebungen 11 bzw. Versteifungselemente wird die Stabilität des Gehäusedeckels 6 erhöht. Die Verstrebungen 11 sind dabei einstückig mit dem Gehäusedeckel 6 verbunden. Die Verstrebungen weisen beispielsweise eine kastenförmige, stabsförmige, wabenförmige oder kreuzförmige Form auf.

Das Sensorgehäuse 1 und der Gehäusedeckel 6 sind mittels Schweißen, Kleben, Einpressen und/oder Vergießen miteinander verbunden.

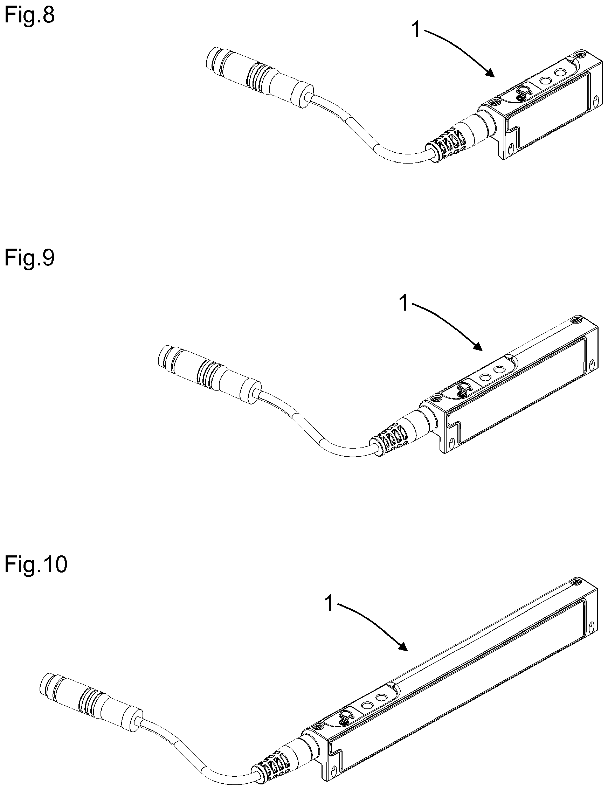

Die Figuren 8 bis 10 zeigen jeweils ein Sensorgehäuse 1 mit jeweils unterschiedlicher Länge.

### Bezugszeichen:

1 Sensorgehäuse
2 Sensorelement
3 leistenartiger Gehäusevorsprung
4 Nut
5 leistenartige Leiterplatte
6 Gehäusedeckel
7 Gewinde
8 Ebene Seitenflächen des Gehäusevorsprungs
9 Hallelemente
11 mechanische Verstrebungen
14 umlaufende Nut
15 umlaufende Dichtung
16 Stiftverbindung
17 kapazitive Bedienungselemente
18 Kabelanschluss
19 Stecker
20 Sensor
22 elektrischer Anschluss
23 Befestigungsschraube
24 Madenschraube
25 stufenförmiger Abschnitt
26 Schraubenspitze
27 Nutschulter
28 Nutwand
29 Nutboden
30 Spitzenschräge bzw. Schräge der Schraubenspitze
31 Betätigungsmittel
32 Linearantriebsgehäuse
33 Abstand der Seitenflächen
34 Abstand der Nutöffnung
36 Nutkörper
37 Schräge
38 stirnseitiges Ende

## Patentansprüche

1. Sensorgehäuse mit mindestens einem Sensorelement (2), wobei das Sensorgehäuse (1) einen leistenartigen Gehäusevorsprung (3) besitzt, der zur Aufnahme in einer längs eines Linearantrieb-Gehäuses verlaufenden Nut (4) vorgesehen ist, wobei mindestens eine langgestreckte leistenartige Leiterplatte (5) in diesem Gehäusevorsprung (3) in dessen Längsrichtung angeordnet ist, wobei der Gehäusevorsprung (3) ebene Seitenflächen (8) aufweist, so dass kein Hinterschnitt gebildet ist, wobei der Abstand der Seitenflächen (8) kleiner als der Abstand einer Nutöffnung der Nut (4) ist, **dadurch gekennzeichnet, dass** das Sensorgehäuse (1) wenigstens ein schräg zu wenigstens einer Seitenfläche (8) angeordnetes Gewinde (7) aufweist zur Aufnahme wenigstens einer Befestigungsschraube (23) zur Fixierung des Sensorgehäuses (1) in der Nut (4), wobei die Befestigungsschraube (23) einen stufenförmigen Abschnitt (25) aufweist, wobei die Befestigungsschraube (23) in dem Gewinde (7) angeordnet ist, wobei das Gewinde mit einem elektrischen Potential, nämlich einem Erdungspotential des Sensors verbunden ist.

2. Sensorgehäuse nach einem der vorhergehenden Ansprüche, **dadurch gekennzeichnet, dass** das Gewinde teilweise in dem Gehäusevorsprung (3) angeordnet ist.

3. Sensorgehäuse nach einem der vorhergehenden Ansprüche, **dadurch gekennzeichnet, dass** die Befestigungsschraube (23) im Sensorgehäuse (1) versenkt ist.

4. Sensorgehäuse nach einem der vorhergehenden Ansprüche, **dadurch gekennzeichnet, dass** die Befestigungsschraube (23) eine Madenschraube (24) ist.

5. Sensorgehäuse nach einem der vorhergehenden Ansprüche, **dadurch gekennzeichnet, dass** die Befestigungsschraube (23) eine Schraubenspitze (26) aufweist, wobei die Schraubenspitze (26) bei einer Befestigung des Sensorgehäuses (1) unter einer Nutschulter (27) angeordnet ist.

6. Sensorgehäuse nach einem der vorhergehenden Ansprüche, **dadurch gekennzeichnet, dass** das Ende der Befestigungsschraube (23) eine Spitzenschräge (30) bzw. Phase aufweist, wodurch das Sensorgehäuse (1) und die Befestigungsschraube (23) mindestens zwischen den Nutwänden (28) einen Kraftschluss bilden, wobei das Sensorgehäuse (1) in Richtung Nutboden (29) bewegt ist.

7. Sensorgehäuse nach einem der vorhergehenden Ansprüche, **dadurch gekennzeichnet, dass** das Sensorgehäuse (1) im Querschnitt L-förmig ausgebildet ist.

8. Sensorgehäuse nach einem der vorhergehenden Ansprüche, **dadurch gekennzeichnet, dass** sich ein Gehäusedeckel (6) nahezu über die gesamte Sensorgehäuselänge erstreckt.

9. Sensorgehäuse nach einem der vorhergehenden Ansprüche, **dadurch gekennzeichnet, dass** die Sensorelemente (2) Hallelemente (9) sind.

10. Sensorgehäuse nach einem der vorhergehenden Ansprüche, **dadurch gekennzeichnet, dass** das Sensorgehäuse (1) mechanische Verstrebungen (11) aufweist, die im Gehäuseinnern angeordnet sind.

11. Sensorgehäuse nach Anspruch 8, **dadurch gekennzeichnet, dass** zwischen dem Sensorgehäuse (1) und dem Gehäusedeckel (6) eine umlaufende Nut (14) angeordnet ist, in der eine umlaufende Dichtung (15) angeordnet ist.

12. Sensorgehäuse nach Anspruch 8 oder 11, **dadurch gekennzeichnet, dass** zwischen dem Sensorgehäuse (1) und dem Gehäusedeckel (6) wenigstens eine Stiftverbindung (16) vorgesehen ist.

13. Sensorgehäuse nach Anspruch 8, 11 oder 12, **dadurch gekennzeichnet, dass** das Sensorgehäuse (1) und der Gehäusedeckel (6) mittels Schweißen, Kleben, Einpressen und/oder Vergießen miteinander verbunden sind.

14. Sensorgehäuse nach einem der vorhergehenden Ansprüche, **dadurch gekennzeichnet, dass** in dem Sensorgehäuse (1) kapazitive Bedienungselemente (17) angeordnet sind.

15. Sensorgehäuse nach einem der vorhergehenden Ansprüche, **dadurch gekennzeichnet, dass** das Sensorgehäuse (1) an einem stirnseitigen Ende einen elektrischen Anschluss (22), insbesondere einen Kabelanschluss (18) oder einen Stecker (19) aufweist.

## Claims

1. Sensor housing having at least one sensor element (2), the sensor housing (1) having an ridge-like housing projection (3) which is provided for mounting in a groove (4) extending along a linear drive housing, wherein at least one elongated strip-like printed circuit board (5) is arranged in this housing projection (3) in its longitudinal direction, wherein the housing projection (3) has flat side surfaces (8) so that no undercut is formed, wherein the distance of the side surfaces (8) is smaller than the distance of a groove opening of the groove (4), **characterized in that** the sensor housing (1) has at least one thread (7) arranged obliquely to at least one side surface (8) for receiving at least one fastening screw (23) for fixing the sensor housing (1) in the groove (4), the fastening screw (23) having a stepped portion (25), the fastening screw (23) being arranged in the thread (7), the thread being connected to an electrical potential, namely an earthing potential of the sensor.

2. Sensor housing according to one of the preceding claims, **characterized in that** the thread is partially arranged in the housing projection (3).

3. Sensor housing according to one of the preceding claims, **characterized in that** the fastening screw (23) is recessed in the sensor housing (1).

4. Sensor housing according to one of the preceding claims, **characterized in that** the fastening screw (23) is a grub screw (24).

5. Sensor housing according to one of the preceding claims, **characterized in that** the fastening screw (23) has a screw tip (26), the screw tip (26) being arranged under a groove shoulder (27) when the sensor housing (1) is fastened.

6. Sensor housing according to one of the preceding claims, **characterized in that** the end of the fastening screw (23) has a peak slope (30) or bevel, whereby the sensor housing (1) and the fastening screw (23) form a frictional connection at least between the groove walls (28), the sensor housing (1) being moved towards the groove bottom (29).

7. Sensor housing according to one of the preceding requirements, **characterized in that** the sensor housing (1) is L-shaped in cross-section.

8. Sensor housing according to one of the preceding claims, **characterized in that** a housing cover (6) extends almost over the entire sensor housing length.

9. Sensor housing according to one of the preceding claims, **characterized in that** the sensor elements (2) are Hall elements (9).

10. Sensor housing according to one of the preceding claims, **characterized in that** the sensor housing (1) has mechanical struts (11) which are arranged inside the housing.

11. Sensor housing according to claim 8, **characterized in that** a circumferential groove (14) is arranged between the sensor housing (1) and the housing cover (6), in which a circumferential seal (15) is arranged.

12. Sensor housing according to claim 8 or 11, **characterized in that** at least one pin connection (16) is provided between the sensor housing (1) and the housing cover (6).

13. Sensor housing according to claim 8, 11 or 12, **characterized in that** the sensor housing (1) and the housing cover (6) are connected to one another by welding, gluing, pressing and/or molding.

14. Sensor housing according to one of the preceding claims, **characterized in that** capacitive operating elements (17) are arranged in the sensor housing (1).

15. Sensor housing according to one of the preceding claims, **characterized in that** the sensor housing (1) has an electrical connection (22), in particular a cable connection (18) or a plug (19) at one end face.

## Revendications

1. Boîtier de capteur comportant au moins un élément de capteur (2), le boîtier de capteur (1) comportant une saillie de boîtier (3) en forme de nervure qui est prévue pour le montage dans une rainure (4) s'étendant le long d'un boîtier d'entraînement linéaire, dans lequel au moins une carte de circuit imprimé (5) en forme de bande allongée est disposée dans cette saillie de boîtier (3) dans sa direction longitudinale, la saillie de boîtier (3) ayant des surfaces latérales planes (8) de sorte qu'aucune contre-dépouille n'est formée, dans laquelle la distance des surfaces latérales (8) est inférieure à la distance d'une ouverture de rainure de la rainure (4), **caractérisé en ce que** le boîtier de capteur (1) présente au moins un filetage (7) disposé obliquement sur au moins une surface latérale (8) pour recevoir au moins une vis de fixation (23) pour fixer le boîtier de capteur (1) dans la rainure (4), la vis de fixation (23) présentant une partie étagée (25), la vis de fixation (23) étant disposée dans le filetage (7), le filetage étant relié à un potentiel électrique, à savoir un potentiel de mise à la terre du capteur.

2. Boîtier de capteur selon l'une des revendications précédentes, **caractérisé en ce que** le filetage est partiellement disposé dans la saillie du boîtier (3).

3. Boîtier de capteur selon l'une des revendications précédentes, **caractérisé en ce que** la vis de fixation (23) est encastrée dans le boîtier de capteur (1).

4. Boîtier de capteur selon l'une des revendications précédentes, **caractérisé en ce que** la vis de fixation (23) est une vis sans tête (24).

5. Boîtier de capteur selon l'une des revendications précédentes, **caractérisé en ce que** la vis de fixation (23) présente une pointe de vis (26), la pointe de vis (26) étant disposée sous un épaulement de rainure (27) lorsque le boîtier de capteur (1) est fixé.

6. Boîtier de capteur selon l'une des revendications précédentes, **caractérisé en ce que** l'extrémité de la vis de fixation (23) présente une pente maximale (30) ou un biseau, le boîtier de capteur (1) et la vis de fixation (23) formant une liaison par friction au moins entre les parois de la rainure (28), le boîtier de capteur (1) étant déplacé vers le fond de la rainure (29).

7. Boîtier de capteur selon l'une des revendications précédentes, **caractérisé en ce que** le boîtier de capteur (1) a une section transversale en forme de L.

8. Boîtier de capteur selon l'une des revendications précédentes, **caractérisé en ce qu'**un couvercle de boîtier (6) s'étend sur presque toute la longueur du boîtier du capteur.

9. Boîtier de capteur selon l'une des revendications précédentes, **caractérisé en ce que** les éléments de capteur (2) sont des éléments Hall (9).

10. Boîtier de capteur selon l'une des revendications précédentes, **caractérisé en ce que** le boîtier de capteur (1) présente des entretoises mécaniques (11) qui sont disposées à l'intérieur du boîtier.

11. Boîtier de capteur selon la revendication 8, **caractérisé en ce qu'**une rainure circonférentielle (14) est disposée entre le boîtier de capteur (1) et le couvercle de boîtier (6), dans lequel est disposé un joint circonférentiel (15).

12. Boîtier de capteur selon la revendication 8 ou 11, **caractérisé en ce qu'**au moins une connexion à broches (16) est prévue entre le boîtier de capteur (1) et le couvercle de boîtier (6).

13. Boîtier de capteur selon la revendication 8, 11 ou 12, **caractérisé en ce que** le boîtier de capteur (1) et le couvercle de boîtier (6) sont reliés l'un à l'autre par soudage, collage, pressage et/ou moulage.

14. Boîtier de capteur selon l'une des revendications précédentes, **caractérisé en ce que** des éléments de commande capacitifs (17) sont disposés dans le boîtier de capteur (1).

15. Boîtier de capteur selon l'une des revendications précédentes, **caractérisé en ce que** le boîtier de capteur (1) comporte une connexion électrique (22), en particulier une connexion de câble (18) ou un connecteur (19) sur une face frontale.
